# EUROPÄISCHE PATENTSCHRIFT

(11) **EP 0 309 513 B1**
(45) Veröffentlichungstag und Bekanntmachung des Hinweises auf die Patenterteilung: **01.09.1993**
(21) Anmeldenummer: 88902812.2
(22) Anmeldetag: 06.04.1988
(51) Int. Cl.: B23Q 11/00, B23Q 1/02, B23Q 37/00, B24B 53/053

(54) **SPINDELSYSTEM FÜR WERKZEUGMASCHINEN, INSBESONDERE SCHLEIFMASCHINEN**
SPINDLE SYSTEM FOR MACHINE-TOOLS, IN PARTICULAR GRINDING MACHINES
SYSTEME DE BROCHES POUR MACHINES-OUTILS, EN PARTICULIER MEULEUSES

(30) Priorität: 07.04.1987 DE 3711600
(43) Veröffentlichungstag der Anmeldung: 05.04.1989
(73) Patentinhaber: Saljé, Ernst, D-21227 Bendestorf (DE)
(72) Erfinder: LANG, Werner, Gerhard, D-6113 Babenhausen (DE); SALJE, Ernst, D-2106 Bendestorf (DE)
(74) Vertreter: Zapfe, Hans, Dipl.-Ing.
(86) Internationale Anmeldenummer: DE8800219
(87) Internationale Veröffentlichungsnummer: WO8807910

(56) Entgegenhaltungen:
- EP-A- 0 001 262
- EP-A- 0 256 518
- CH-A- 277 100
- DE-A- 3 508 433
- DE-B- 2 702 616
- DE-B-12 689 36
- FR-E- 77 773
- GB-A- 13 659
- GB-A-29 943 7
- JP-A-59 161 201
- JP-A-59 161 202
- JP-A-59 192 456
- JP-A-61 121 802
- US-A- 1 872 552
- US-A- 2 459 384
- US-A- 3 552 375
- US-A- 3 609 931
- US-A- 4 417 422
- US-A-34 928 94
- US-A-44 923 56

## Beschreibung

Die Erfindung bezieht sich auf ein Spindelsystem für Schleifmaschinen nach dem Oberbegriff des Patentanspruchs 1.

In der modernen Fertigungstechnik werden die Anforderungen an die Genauigkeit einer Schleifmaschine immer größer. Die dabei auftretenden Probleme sind vielgestaltig und bringen auch unerwartete und neue Aspekte, je mehr den Umständen und Einflußgrößen im einzelnen nachgegangen wird.

Wichtige Gesichtspunkte sind u.a. eine hohe statische und dynamische Steifigkeit, die möglichst weitgehende Beherrschung ungünstiger Temperatureinflüsse und dadurch bedingter Deformationen in wichtigen Bereichen der Schleifmaschine bzw. die Beseitigung eingetretener Abweichungen von einem erwünschten Zustand, schließlich auch die Vermeidung zu großer Beschränkungen im Einsatz.

Das Spindelsystem einer Schleifmaschine stellt dabei ein besonders wichtiges Element dar, insbesondere, wenn es sich um eine Arbeitsspindel mit einem Schleifwerkzeug handelt, weil hierdurch unmittelbar die Auswirkung von Ungenauigkeiten am Werkstück in Erscheinung tritt. Dies gilt sowohl für Produktionswerkstücke als auch für in bestimmter Weise zu bearbeitende Werkzeuge, die dann zum Einsatz kommen sollen. Hier ist besonders an Schleifscheiben als Werkzeuge gedacht, die durch Abrichten den gewünschten Zustand für die Bearbeitung erhalten müssen. In solchen und anderen Fällen kommt es dann auch auf die Genauigkeit bzw. Einstellung der Spindel für das Abrichtwerkzeug oder dergleichen an.

Die US-A-4 417 422 offenbart eine Schleifmaschine mit einem Ständer und zwei Spindelstöcken, die durch eine erste Spindel gemeinsam und durch eine zweite, hierzu parallele Spindel relativ zueinander bewegbar sind. Der erste Spindelstock trägt eine Schleifspindel, der zweite Spindelstock eine Abrichtspindel. Die jeweiligen Spindeln sind in den Spindelstöcken untergebracht, so daß diese in etwa teilweise den Charakter eines Gehäuses haben. die beiden Spindelstöcke sind - gewissermaßen in Reihenanordnung - seitlich am Ständer angeordnet, wodurch sich eine außerordentlich weit ausladende Bauweise mit entsprechenden Biegemomenten ergibt. Die für Feinschleifoperationen erforderliche Steifigkeit kann infolgedessen nur durch einen enormen Konstruktionsaufwand erreicht werden, der von einem hohen Gewicht begleitet ist, was wiederum zu entsprechend stark ausgelegten Antriebs- und Führungselementen führt.

Aufgabe der Erfindung ist es, verformungssteife und kompakt gebaute Spindelsysteme für Schleifmaschinen zu schaffen, bei denen die vorstehend erläuterten Forderungen möglichst weitgehend berücksichtigt werden, um die Genauigkeit zu erhöhen und den Erfordernissen einer modernen Fertigung Rechnung zu tragen. Die Erfindung strebt dabei besonders vorteilhafte Ausbildungen von Spindelsystemen und deren Teilen bzw. damit in Verbindung stehenden Elementen auch im einzelnen an. Weitere mit alledem zusammenhängende Probleme, mit denen sich die Erfindung befaßt, ergeben sich aus der jeweiligen Erläuterung der aufgezeigten Lösung.

Die Lösung der gestellten Aufgabe erfolgt erfindungsgemäß durch die Merkmale im Kennzeichen des Patentanspruchs 1.

Es ergibt sich dadurch eine kompakte Bauweise, bei der sich eine hohe Stabilität und günstige Kraftverhältnisse erzielen lassen.

Sowohl das Hauptgehäuse als auch die Zusatzeinheit bzw, ein Gehäuse derselben werden vorteilhaft wenigstens teilweise als Schweißkonstruktion ausgebildet. Es kann dabei auch eine Verrippung vorgesehen sein.

Das Hauptgehäuse und auch die Zusatzeinheit bzw. ein Gehäuse derselben lassen sich weiterhin auch ringsum weitgehend geschlossen ausbilden, so daß die im Inneren liegenden Teile von äußeren Einflüssen geschützt sind.

Das Hauptgehäuse kann sowohl an seiner Rückseite als auch in einem seitlichen Bereich mit Führungselementen versehen sein, und zwar zweckmäßig mit vertikalen Führungselementen für eine Verstell- oder Verschiebebewegung des Hauptgehäuses bzw. der gesamten Baugruppe in dieser Richtung. Mit anderen Worten, die Führungselemente lassen sich so anordnen, daß sie sich etwa in einer Ebene senkrecht zu den Spindelachsen oder etwa in einer Ebene parallel zu den Spindelachsen befinden. Die Baugruppe mit Schleifspindel und Abrichtspindel kann je nach Ausbildung sowohl für Planschleifmaschinen, namentlich in einer Säule oder dergleichen angeordnet, als auch für Außenrundschleifmaschinen, z.B. auf dem Spindelkasten angeordnet, verwendet werden.

Weitere vorteilhafte Ausgestaltungen des Spindelsystems bzw, der Baugruppe werden im einzeln weiter unten noch erläutert.

Im Zuge einer weiteren Ausgestaltung der Erfindung ist vorgesehen, daß zwischen einem Verstellglied für die Zusatzeinrichtung und dieser bzw. einem tragenden Teil der letzteren ein kraftübertragendes, fernbetätigbares Feinstellorgan vorhanden ist. Dies kann jedes geeignete Element sein, das bei hoher Steifigkeit eine Einstellmöglichkeit im Bereich kleiner Werte zuläßt, insbesondere im Mikrometerbereich. Vorteilhaft wird als Feinstellorgan ein piezo-elektrischer Aktuator, Translator oder dergleichen vorgesehen. Ein solches Aggregat ist in der Lage, hohe Kräfte aufzunehmen und sehr genaue kleine Längenänderungen zu bewirken. Dabei wird z.B. der umgekehrte piezo-elektrische Effekt, die sogenannte Elektrostiktion, ausgenutzt, bei dem sich die Abmessungen bestimmter Materialien beim Anlegen eines elektrischen Feldes verändern. Durch Anlegen einer entsprechenden Spannung kann bei einem solchen Element bei Aufrechterhaltung der erforderlichen Kraftverhältnisse eine positive oder negative Längenänderung erreicht werden.

Bei der Erfindung ist mittels eines solchen Feinstellorgans eine Einstellmöglichkeit einer Spindel relativ zur anderen unabhängig von einem sonstigen Vorschubantrieb oder dergleichen gegeben. Es ist durch das Feinstellorgan insbesondere eine sehr exakte Radialzustellung eines Abrichtwerkzeuges bezüglich einer Schleifscheibe möglich, die genauer als ein üblicher Vorschubantrieb zwischen beiden Teilen ist. Dies hat zum einen den Vorteil, daß sich Korrekturen in der Position der einen Spindel relativ zur anderen außerordentlich feinfühlig durchführen lassen. Ein wesentlich weiterer Vorteil einer solchen Einstellmöglichkeit besteht darin, daß sich in der Anwendung bei einer Schleifmaschine besondere moderne Prozesse und Abrichtprogramme ausführen lassen, namentlich solche, die sich auf die Topographie der Schleifscheibe auswirken, z.B. sogenanntes "touch dressing".

Im Zuge einer wiederum weiteren Ausgestaltung der Erfindung ist vorgesehen, daß zwischen einem die zweite Spindel haltenden Teil der Zusatzeinheit und einem Tragkörper für dieselbe kraftübertragende, fernbetätigbare Feinstellorgane vorhanden sind. Das über die Art und Ausbildung solcher Feinstellorgane weiter oben gesagte gilt hier sinngemäß und entsprechend.

Durch solche Feinstellorgane ist eine Korrektur der Spindeln bzw. der von ihnen getragenen Abricht-Werkzeuge relativ zueinander sehr genau und feinfühlig möglich, insbesondere im Mikrometerbereich. Dies ist bei einer Schleifmaschine für die Abrichtspindel mit Bezug auf die Schleifspindel von großer Bedeutung. Die Verstellmöglichkeit kann dabei nur in einer Achse, insbesondere in axialer Richtung der einen Spindel, vorgesehen sein. Vorteilhaft wird aber eine Verstellmöglichkeit in zwei Achsen vorgesehe, wobei die zweite Achse insbesondere eine Schwenkachse ist. Die Schwenkmöglichkeit ist insbesondere günstig, um einen Wärmeverzug auszugleichen.

Eine Einstellmöglichkeit in zwei Freiheitsgraden läßt sich bereits durch drei Feinstellorgane in Dreiecksanordnung erzielen. Es kann aber dazu auch zweckmäßig sein, vier Einstellorgane vorzusehen, etwa an den Eckpunkten eines Quadrats oder Rechtecks.

Zur weiteren Offenbarung der Erfindung mit ihren Einzelheiten, Merkmalen und Vorteilen wird ausdrücklich auf die übrigen Unteransprüche und die nachstehend in Verbindung mit den Figuren gegebene Erläuterung Bezug genommen.

### Kurze Beschreibung der Zeichnung

Es zeigen:
- Fig. 1: ein als Baugruppe ausgebildetes System mit zwei Arbeitsspindeln in einem vertikalen Schnitt nach der Linie I - I in Fig. 2,
- Fig. 2: einen Schnitt nach der Linie II - II in Fig. 1,
- Fig. 3: einen horizontalen Schnitt nach der Linie III - III in Fig. 1,
- Fig. 4: einen Schnitt etwa nach der Linie IV - IV in Fig. 3,
- Fig. 5: eine abgewandelte Ausführung in einem etwa der Fig. 3 entsprechenden Teilschnitt,
- Fig. 6: den vorderen Teil einer Arbeitsspindel mit eingesetztem Abrichtwerkzeug,
- Fig. 7: eine Prinzipdarstellung eines Teils eines Spindelsystems und
- Fig. 8: einen axialen Längsschnitt durch ein Spindelsystem.

### Beste Wege zur Ausführung der Erfindung

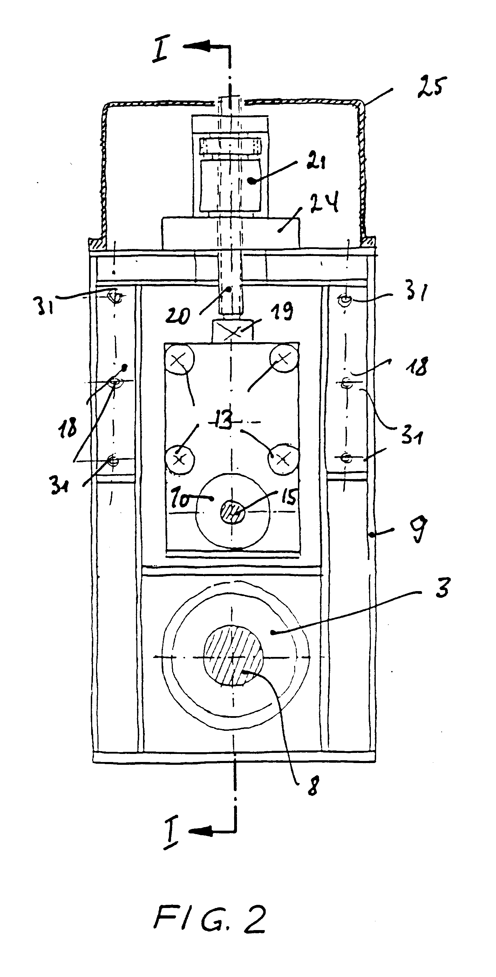

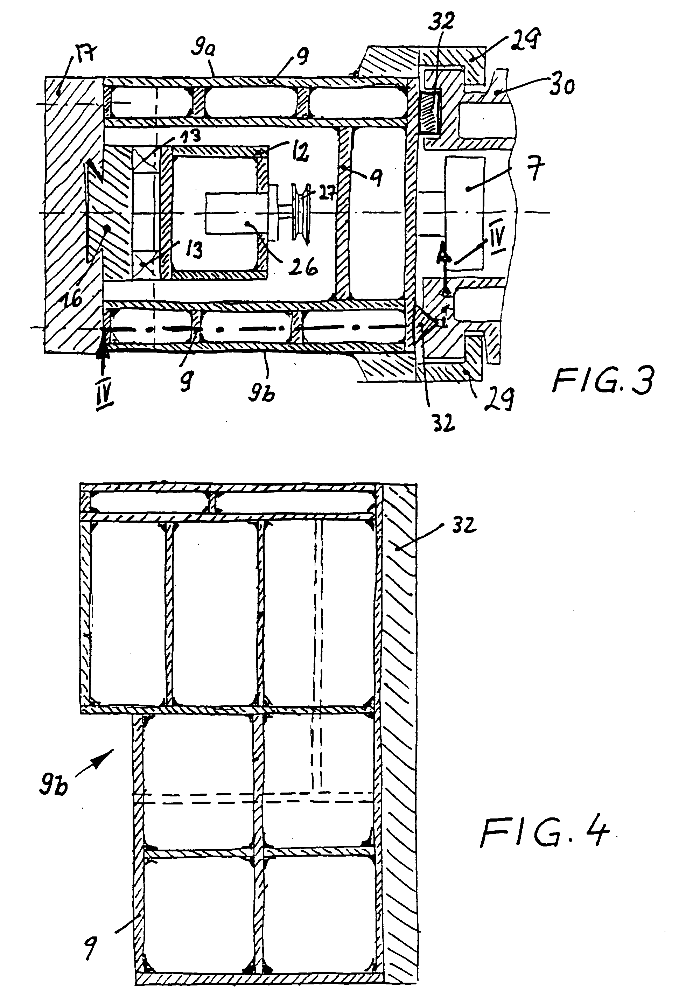

Ein mit der Zahl 9 bezeichnetes Hauptgehäuse ist in Schweißkonstruktion ausgeführt, wobei u.a. die Seitenwandungen 9a und 9b doppelwandig sind. Fig. 4 läßt die starke Verrippung dieser Seitenwandungen deutlich erkennen. Im unteren Teil des Hauptgehäuses 9 ist eine insgesamt mit der Zahl 3 bezeichnete Arbeitsspindel gehalten, die am vorderen Ende eine Aufnahme für eine Schleifscheibe 1 aufweist. Mit der Zahl 2 sind Flansche der Einspannvorrichtung für die Schleifscheibe bezeichnet. Die Schleifspindel 3 ist als sog. Pinole 3a eingebaut, wobei unter dem Begriff der Pinole eine außen zumindest weitgehend geschlossene Einheit verstanden werden soll, die in ihrem Inneren auch die Lagerung für die Schleifspindel enthält. Diese Pinole 3a ist im Hauptgehäuse 9 mit Hilfe einer vorderen Buchse 4 und einer hinteren Buchse 5 gehalten. Diese Buchsen können verschiedenartig ausgebildet sein, worauf weiter unten im einzelnen noch eingegangen wird. Auf dem hinteren Spindelende 6 sitzt eine Antriebsriemenscheibe 7. Auf ihr läuft ein nicht gezeigter Riemen, der seine Bewegung von einem ebenfalls nicht gezeigten Antriebsmotor in üblicher Weise erhält. In Fig. 2 ist der vordere Teil der Arbeitsspindel im Schnitt bei der Zahl 8 erkennbar.

Im Inneren des kastenartigen Hauptgehäuses 9 ist eine insgesamt mit der Zahl 33 bezeichnete Zusatzeinheit angeordnet, deren Gehäuse 12 vorteilhaft auch als Schweißkonstruktion ausgebildet ist. In dem Gehäuse 12 ist eine Abrichtspindel 10 in ähnlicher Weise gehalten wie die Schleifspindel 3 im Hauptgehäuse 9. Es handelt sich auch hier wieder um eine Pinole 10a, welche die Lagerung der Abrichtspindel mit einschließt. Diese Einheit ist mit Buchsen 11 im Gehäuse 12 festgelegt. Die Abrichtspindel 10, die in Fig. 2 bei der Zahl 15 im Schnitt erkennbar ist, trägt auf einer geeigneten Aufnahme am vorderen Ende eine Abrichtrolle 14, namentlich eine Diamantrolle, die zum Abrichten der Schleifscheibe 1 dient. Auf dem hinteren Ende der Abrichtspindel 10 sitzt eine Riemenscheibe 28, die über einen gestrichelt angedeuteten Riemen in Antriebsverbindung mit der Riemenscheibe 27 auf der Achse eines elektrischen Antriebsmotors 26 steht. Der letztere ist ebenfalls im Gehäuse 12 befestigt.

Das Gehäuse 12 der Zusatzeinheit 33 ist über noch zu erläuternde Elemente 13 an einem einen Tragkörper bildenden Schlitten 16 gehalten, der z.B. mittels einer Schwalbenschwanzführung in einem Führungsteil 17 vertikal verschiebbar ist. Dieser Führungsteil ist oben und an den Seiten durch Schrauben am Hauptgehäuse 9 starr befestigt. In Fig. 2 sind die bearbeiteten Anlageflächen 18 für den Führungsteil 17 mit den Gewindebohrungen 31 für die Befestigungsschrauben des Führungsteiles erkennbar. Der Schlitten 16 ist über ein Element 19, das im einzelnen noch erläutert wird, mit einer festen Transportspindel 20 verbunden, in deren Gewinde eine drehbar, aber axial unverschiebbar in einem Haltebügel 24 gelagerte Mutter 21 eingreift. Der Haltebügel 24 ist auf der Oberseite des Hauptgehäuses 9 befestigt. Mit der Mutter ist eine Zahnriemenscheibe 21a verbunden, die ihre Drehung über einen Zahnriemen 22 von einer Zahnriemenscheibe 23a auf der Welle eines steuerbaren Elektromotors 23 erhalten kann. Der letztere ist auf der Oberseite des Hauptgehäuses 9 angeschraubt. Mit der Zahl 25 ist eine die genannten Teile schützende Abdeckhaube bezeichnet.

Die Energieversorgungsleitungen bzw. Steuerleitungen für die Motoren 23 und 26 sind in üblicher Weise verlegt und angeschlossen und nicht dargestellt.

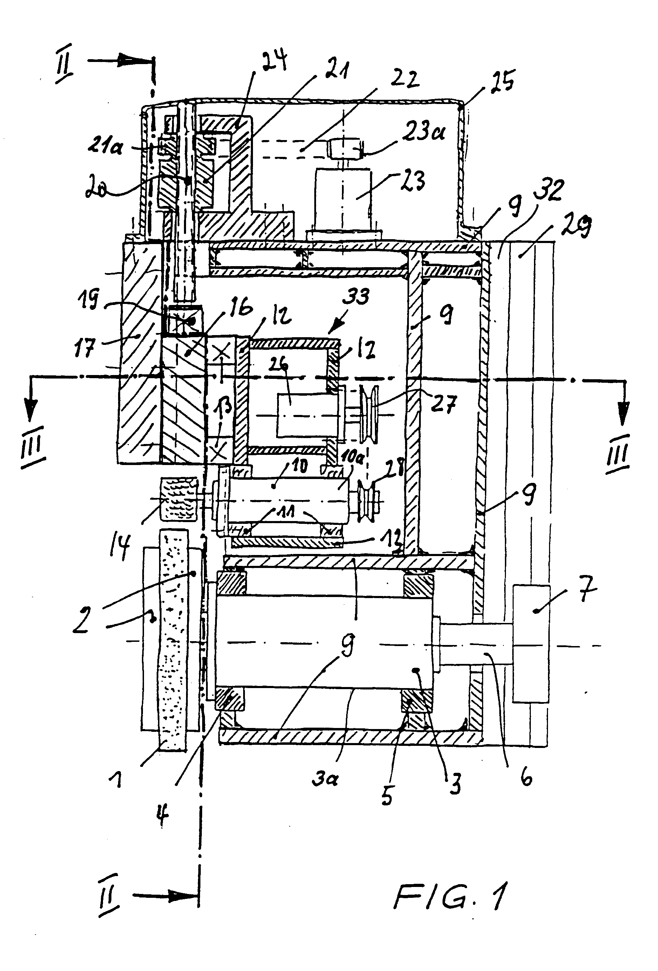

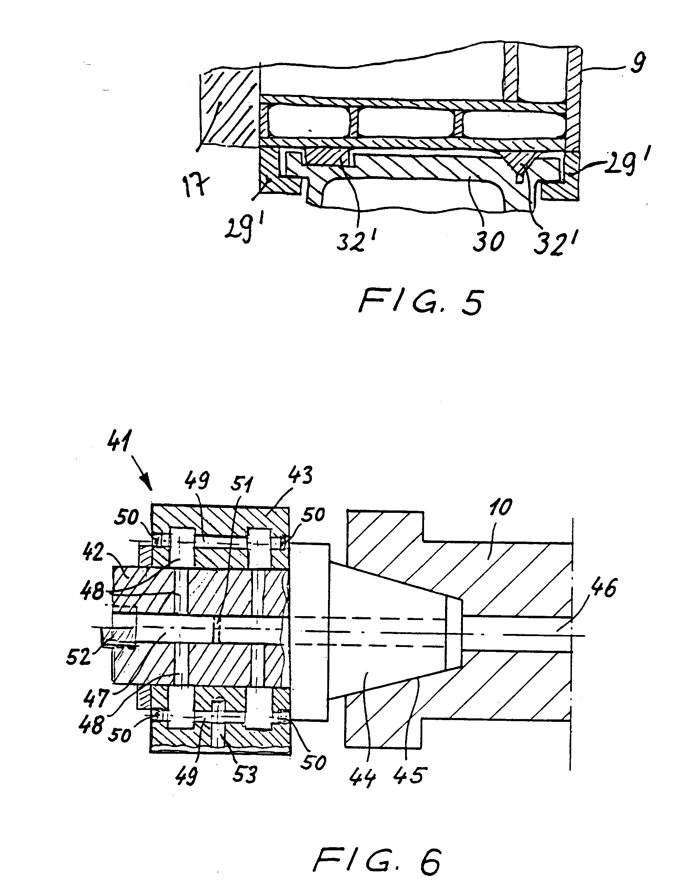

Mit der erläuterten vorteilhaften Ausführung ergibt sich eine kompakte und weitgehend geschlossene Baugruppe, die insbesondere als verschiebbare Einheit, Schlitten od.dgl. an oder in einem Maschinenständer od.dgl. angeordnet sein kann. In Fig. 1 und 3 sind am Hauptgehäuse angeschweißte Führungsleisten 32 erkennbar, die auf entsprechenden Gegenflächen eines Ständers oder ähnlichen Gestellteiles 30 einer Schleifmaschine gleiten. Mit der Zahl 29 sind am Hauptgehäuse 9 angeschraubte Führungsleisten bezeichnet, die Führungsteile am Gestell 30 umgreifen. Mit solchen oder ähnlichen rückseitig angebrachten Führungen kann also die gesamte Baugruppe an oder in einer Säule od.dgl. einer Maschine angeordnet sein. Ohne wesentliche Änderungen der sonstigen Konzeption läßt sich die Ausbildung aber auch so treffen, daß die Führungsteile an einer Seite des Hauptgehäuses 9 vorhanden sind, wie dies in Fig. 5 bei den Zahlen 29' und 32' gezeigt ist. Dann ist die gesamte Baugruppe beispielsweise bei einer Außenrundschleifmaschine einsetzbar, während die davor erläuterte Ausführung besonders für eine Flachschleifmaschine geeignet ist.

In allen Fällen liegt die Zusatzeinheit 33 im Inneren des Hauptgehäuses 9. Dadurch ergibt sich nicht nur eine geschützte Unterbringungen der Zusatzeinheit, sondern es lassen sich zugleich auch besonders günstige Kraftverhältnisse erzielen. Es sind keine großen Hebelarme zwischen einzelnen Kraftangriffspunkten und den Abstützungen vorhanden. So liegt auch die Spindel 20 für die Vertikalbewegung des Schlittens 16 mit der Zusatzeinheit 33 in der Wirkungslinie der Abrichtkraft. Die Spindel befindet sich außerdem in unmittelbarer Nähe der Führung des Schlittens 16 am Führungsteil 17, so daß auch nur ein geringes Moment auf die Führungsbahn ausgeübt wird. Die Kräfte, die auf das Abrichtwerkzeug 14 wirken, sind daher leicht ins Gleichgewicht zu bringen, ohne daß große Deformationen auftreten.

Ein weiterer Vorteil ergibt sich dadurch, daß empfindliche Teile nach außen hin weitgehend abgedeckt sind, so auch durch den Führungsteil 17, so daß ohne zusätzliche Abdeckbleche oder sonstige aufwendige Maßnahmen ein wirksamer Schutz erzielt ist.

Bei den weiter oben genannten Elementen 13 und 19 kann es sich um einfache starre Verbindungsteile handeln. Mit besonderem Vorteil ist zumindest ein Teil dieser Elemente als Feinstellorgan ausgebildet, namentlich in Form von piezoelektrischen Aktuatoren od.dgl.

So sind bei dem dargestellten Ausführungsbeispiel die Elemente 13 als solche Feinstellorgane ausgebildet. Wie aus den Fig. 1, 2 und 3 hervorgeht, sind vier solcher Feinstellorgane in Viereckanordnung zwischen dem Schlitten 16 und dem Gehäuse 12 vorgesehen. Sie verbinden diese Teile starr miteinander, erlauben aber bei Speisung mit einer entsprechenden elektrischen Spannung eine Längung oder Verkürzung um sehr geringe Beträge, die besonders im Mikrometerbereich liegen können. Die Feinstellorgane 13, deren Zuleitungen und elektrische Versorgung nicht besonders dargestellt sind, können einzeln oder in Gruppen bzw. sämtlich gleichzeitig betätigt werden. Je nach der Art der Betätigung ist es somit möglich, entweder nur eine axiale Verstellung des Gehäuses 12 mit der Abrichtspindel 10 zu erreichen, wenn alle vier Elemente 13 beaufschlagt werden, oder nur eine Schwenkbewegung zu erzeugen, wenn die beiden oberen Elemente 13 und die beiden unteren Elemente 13 mit unterschiedlichen Vorzeichen betätigt werden, oder aber auch eine kombinierte Bewegung mit Axialverstellung und Schwenkung herbeizuführen, wenn unterschiedlich große Beaufschlagungen der Elemente mit verschiedenen Vorzeichen oben und unten erfolgen.

Wenn das Element 19 als Feinstellorgan ausgebildet wird, besteht die vorteilhafte Möglichkeit, unabhängig vom normalen radialen Vorschubantrieb für die Abrichtspindel 10 mittels der Transportspindel 20 eine radiale Feinverstellung der Abrichtspindel 10 vorzunehmen. Dazu wird das Feinstellorgan, insbesondere ein piezoelektrischer Aktuator od.dgl. mit entsprechender Spannung beaufschlagt. Es ist dabei eine Verstellung auch um sehr kleine Beträge möglich, die im Mikrometerbereich liegen können. Damit lassen sich nicht nur Korrekturen bewirken, sondern es können vor allem auch besondere Abrichtprogramme durchgeführt werden.

Die Betätigung der Feinstellorgane kann z.B. von einem Bedienungspult mit entsprechenden Schalt- oder Steuerelementen aus manuell erfolgen. Es ist weiterhin auch möglich, eine Steuerung vorzusehen, bei der die Feinstellorgane je nach dem Bedarfsfall oder den Anforderungen gemäß einem zuvor erstellten Programm betätigt werden. Dies läßt sich auch zu einer Regelung erweitern, die automatisch eine solche Betätigung aller oder bestimmter Feinstellorgane um den notwendigen Betrag bewirkt, daß ein bestimmtes gewünschtes Ergebnis erreicht wird, insbesondere bei dem mit einem Werkzeug durchzuführenden Bearbeitungsgang. Dazu läßt sich namentlich ein sog. Vielstellenmeßgerät verwenden, das in der Lage ist, am bearbeiteten Werkstück die Abweichungen von den Sollwerten festzustellen und entsprechende Kommandos zu geben, die dann, ggfs. über ein geeignetes Programm, zu Korrektureinstellungen führen.

Wie erwähnt, sind piezoelektrische Aktuatoren für die erläuterten Zwecke besonders geeignet. Darüber hinaus können aber auch andere Stellorgane in Betracht gezogen werden, z.B. Wärmedehnstähle od.dgl. Es ist aber immer Voraussetzung, daß die notwendige Steifigkeit und Genauigkeit erreicht wird.

Die an den Spindeln 3 und 10 vorgesehenen Aufnahmen für Schleifscheibe und Abrichtwerkzeug können in verschiedener Weise ausgebildet und insbesondere auch für einen automatischen Werkzeugwechsel eingerichtet sein.

In Fig. 6 ist ein Abrichtwerkzeug 41 gezeigt, das bei dieser Ausführung aus einem Tragkörper 42 und einem darauf befestigten Außenkörper 43 insbesondere mit Diamantbesatz, besteht und mittels eines Konus 44 in einer konischen Aufnahme 45 einer Abrichtspindel 10 lösbar festgelegt werden kann. Die Abrichtspindel 10 weist einen Leitungsweg 46 für ein Strömungsmedium, etwa eine Kühlflüssigkeit, auf. Von diesem Leitungsweg 46 können innerhalb der Spindel nicht gezeigte Abzweigungen ausgehen, die zu bestimmten Stellen, namentlich zu den Lageranordnungen, führen. Der Tragkörper 42 des Abrichtwerkzeuges 41 weist eine zentrale Bohrung 47 auf, in die das durch den Leitungsweg 46 herangeführte Strömungsmedium gelangt. Radiale Kanäle 48 und axiale Kanäle 49 im Tragkörper 42 und im Außenkörper 43 lassen das Medium durch das Werkzeug fließen, um dieses zu kühlen. Mit der Zahl 50 sind Verschlußstopfen an den Enden der axialen Kanäle 49 bezeichnet. An der Stelle 51 kann auch eine Sperre angeordnet sein, um die Zirkulation des Mediums durch das Werkzeug noch zu intensivieren. Bei der oberhalb der Mittellinie in Fig. 6 gezeigten Ausbildung ist die Bohrung 47 nach vorne hin offen, so daß das Medium dort abströmen kann. Es fließt dann zunächst über die Stirnseite des Werkzeuges und kann auch diese noch kühlen.

Bei der unterhalb der Mittellinie in Fig. 6 dargestellten Ausführung ist die zentrale Bohrung 47 vorne mit einem Stopfen 52 od.dgl. verschlossen, während von einem oder mehreren der axialen Kanäle 49 eine radiale Bohrung 53 ausgeht, die nach außen hin offen ist. Durch diese kann das Kühlmedium zur Außenseite des Werkzeuges gelangen und auch diese zusätzlich kühlen. Je nach der Art des Mediums kann dadurch auch der Abrichtvorgang noch verbessert werden.

Es hat sich gezeigt, daß die Eigenerwärmung von Abrichtrollen oder ähnlichen Werkzeugen beim Arbeiten unerwünscht groß werden kann. Damit wird das genauigkeitsbestimmende Werkzeug mit seinem Erzeugungsprofil entsprechend fehlerhaft. Mit einer wirksamen Kühlung kann dieser Fehler reduziert oder eliminiert werden.

Beim Ausführungsbeispiel nach Fig. 6 ist nur eine von vielen Möglichkeiten für die Anordnung und Gestaltung von Kanälen im Abrichtwerkzeug veranschaulicht. Solche Kanäle können je nach den Erfordernissen ausgebildet werden.

Wenn in Fig. 6 nur ein fliegend angeordnetes Abrichtwerkzeug dargestellt ist, so gilt das Gesagte aber auch für beidseitig gelagerte Abrichtrollen oder ähnliche Abrichtwerkzeuge. Die Zu- und Abführung eines Strömungsmediums zur Wärmebeeinflussung kann dabei von einer oder von beiden Seiten geschehen. Die Erfindung schließt auch solche beidseitig gelagerten Abrichtwerkzeuge ein.

Das vorstehend Gesagte gilt sinngemäß und entsprechend auch für andere Werkzeuge auf einer Arbeitsspindel, insbesondere für Schleifscheiben und deren Einspannteile. Auch hier kann es vorteilhaft sein, Flansche oder ähnliche Elemente mit Kühlkanälen zu versehen und/oder ein Strömungsmedium zur Wärmebeeinflussung nach außen austreten zu lassen und dort zur Kühlung beizutragen.

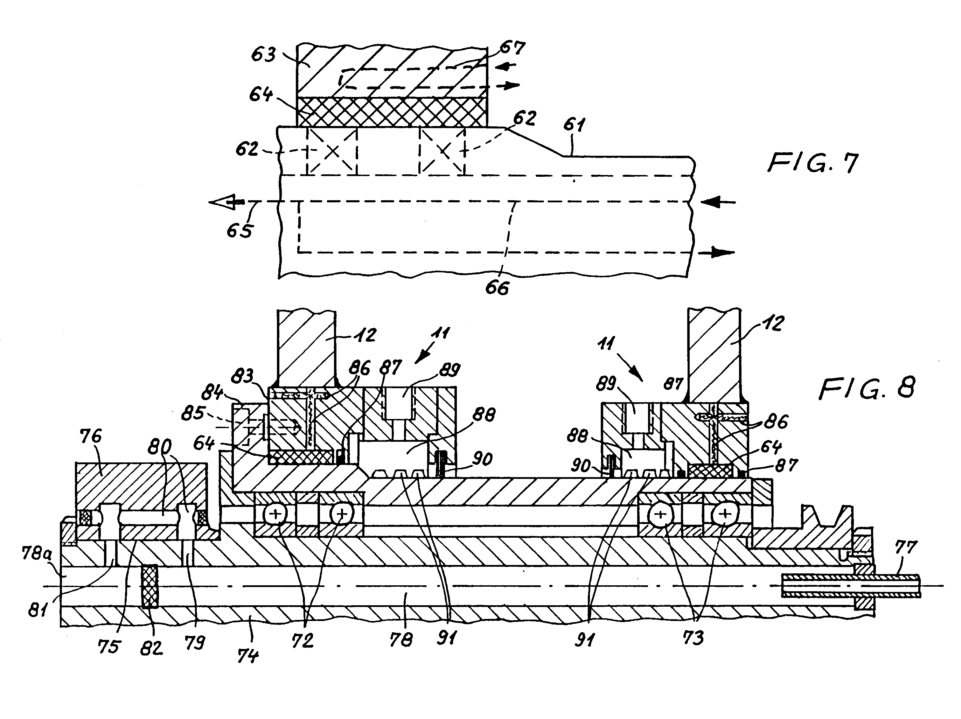

In den Fig. 7 und 8 sind anhand von Ausführungsbeispielen Lösungen für das Problem veranschaulicht, Wärme von Gestellteilen oder einem Gehäuse einer Werkzeugmaschine fernzuhalten, um dadurch unerwünschte Verformungen zu vermeiden.

Fig. 7 zeigt eine als Pinole 61 ausgebildete Spindeleinheit, in der eine im einzelnen nicht wiedergegebene Spindel in Wälzlagern 62 am vorderen Ende gelagert ist. Die Ausbildung am hinteren Ende der Pinole kann ähnlich sein. Zwischen einem das Spindelsystem aufnehmenden Gestellteil oder Gehäuse 63 und dem Umfang der Pinole 61 ist ein Zwischenglied 64 angeordnet, das aus einem im Endzustand starren Material mit Wärmedämmeigenschaften besteht, insbesondere einem für diesen Zweck geeigneten Kunststoff.

Die Spindel selbst ist dabei vorteilhaft mit einem oder mehreren Leitungswegen für ein Strömungsmedium zur Wärmebeeinflussung versehen, wie dies gestrichelt bei der Zahl 66 angedeutet ist. Pfeile auf der rechten Seite der Fig. 7 deuten den Zulauf und den Ablauf eines solchen Mediums an. Von dem Leitungsweg 66 aus kann auch eine Fortsetzung 65 zu einer Aufnahme für ein Werkzeug am vorderen Ende der Spindel gehen, um auch dieses zu kühlen.

Es kann weiterhin vorteilhaft sein, auch im Gehäuse 63 Kühlkanäle od.dgl. vorzusehen, wie dies gestrichelt bei der Zahl 67 angedeutet ist.

In Fig. 8 ist in einer Pinole 71 über Wälzlager 72 und 73 eine Arbeitsspindel 74 gelagert, die in ihrem vorderen Teil eine Aufnahme 75 für ein Werkzeug 76, insbesondere eine Diamant-Abrichtrolle, aufweist. Durch ein Zulaufrohr 77 kann in eine zentrale Bohrung 78 der Spindel 74 ein Strömungsmedium zur Wärmebeeinflussung derselben eingeleitet werden, das dann durch einen oder mehrere radiale Kanäle 79 in der Spindel in Nuten bzw. Kanäle 80 im Werkzeug 76 gelangen und nach dessen Durchströmen über einen oder mehrere radiale Kanäle 81 in eine Fortsetzung 78a der zentralen Bohrung 78 fließt. Von dieser aus kann das Medium nach außen abströmen oder aber auch durch einen nicht gezeigten weiteren Leitungsweg in der Spindel 74 zurückgeführt werden. Mit der Zahl 82 ist eine den Weg des Mediums in der genannten Weise leitende Sperre in der Bohrung 78 bezeichnet.

Die Pinole 71 ist in Gehäuseteilen 12 über darin eingeschweißte, insgesamt jeweils mit der Zahl 11 bezeichnete Buchsen gehalten. Die Planfläche 83 der vorderen Buchse 11 ist genau bearbeitet, weil gegen diese die Pinole 71 mit einem Bund 84 anliegt. Die Befestigung geschieht mit Schrauben 85. Dies erfolgt vorteilhaft mit einer Vorspannung. Wie aus Fig. 8 erkennbar ist, liegt der Bund 84 nur mit zwei verhältnismäßig schmalen Kreisringflächen an der Buchse an, um u.a. eine Wärmeleitung in diesem Bereich gering zu halten.

Jede Buchse 11 besteht bei dem gezeigten Ausführungsbeispiel aus mehreren ineinanderfassenden Teilen, die segmentartig aufgebaut sein können. Mit der Zahl 64 sind in den Buchsen 11 vorgesehene Wärmedämmelemente aus Kunststoff bezeichnet.

Ein besonders vorteilhaftes Verfahren zur Herstellung des Systems besteht darin, daß erst nach den Montieren der Pinole 71 Kunststoff in die dafür vorgesehenen Räume eingespritzt wird, und zwar über Einleitungsbohrungen 86 in den Buchsen 11. Nach dem Aushärten des Kunststoffes ist dann die endgültige Position der Teile erreicht. Geeignete Dichtungen, wie z.B. O-Ringe 87, verhindern, daß der Kunststoff beim Einspritzen seitlich austritt.

Die die Zwischenglieder zwischen dem Gehäuse 12 und der Spindel bzw. der Pinole 71 bildenden Buchsen 11 sind bei der gezeigten vorteilhaften Ausführung außerdem noch mit Durchflußräumen 88 für ein Strömungsmedium zur Wärmebeeinflussung versehen. Zulauföffnungen für das Medium sind mit der Zahl 89 bezeichnet. Ablauföffnungen können auf der diametral entgegengesetzten Seite vorhanden sein und sind nicht dargestellt. Zur Abdichtung der Durchflußräume nach außen sind z.B. radiale Dichtringe 90 vorgesehen, z.B. aus Gummi oder einem geeigneten Kunststoff.

Zur Erhöhung der Kühlwirkung können auf der Pinole 71 in den Räumen 88 Ringe 91 oder ähnliche die Oberfläche erhöhende und damit die Wärmeabfuhr intensivierende Teile, namentlich auch Rippen od.dgl., angeordnet sein. Solche Elemente können parallel oder auch schraubenförmig verlaufen, um dann dem Kühlmittelstrom eine zusätzliche Richtung zu geben.

Die Buchsen 4 und 5 für die Schleifspindel 3 und die Buchsen 11 für die Abrichtspindel 10 bei der Ausführung nach Fig. 1 sind vorteilhaft so oder ähnlich ausgebildet, wie dies vorstehend im einzelnen erläutert wurde. Zuführungs-und Ablaufleitungen für das Strömungsmedium sind in Fig 1 nicht besonders eingezeichnet.

## Patentansprüche

1. Spindelsystem für Schleifmaschinen, bei dem eine drehbare Schleifspindel (3) für eine Schleifscheibe (1) in einem Seitenwände (9a, 9b) und einen Führungsteil (17) aufweisenden, in Zustellrichtung der Schleifscheibe (1) verschiebbaren Hauptgehäuse (9) gelagert ist, dem eine Zusatzeinheit (33) mit einem weiteren Gehäuse (12) mit einer drehbar darin untergebrachten Abrichtspindel (10) zugeordnet ist, wobei die Zusatzeinheit (33) relativ zum Hauptgehäuse (9) im Sinne einer Änderung des Abstandes zwischen den beiden Spindeln (3, 10) mittels eines Verstellgliedes (20) an einer Führung des Führungsteils (17) verstellbar ist, dadurch gekennzeichnet, daß
a) das Hauptgehäuse (9) kastenartig ausgebildet ist und die die Annäherung der beiden Spindeln (3, 19) ermöglichende Führung des Führungsteils (17) auf seiner Innenseite trägt,
b) das Gehäuse (12) der Zusatzeinheit (33) im wesentlichen innerhalb des Hauptgehäuses (9) angeordnet und über einen Tragkörper (16) am Führungsteil (17) geführt ist, und daß
c) das Verstellglied (20) für die Zusatzeinheit (33) in der Wirkungslinie des Abrichtwerkzeugs (14) liegt.

2. Spindelsystem nach Anspruch 1, dadurch gekennzeichnet, daß zwischen dem Verstellglied (20) für die Zusatzeinheit (33) und dem Tragkörper (16) für die Zusatzeinheit ein kraftübertragendes, fernbetätigbares Feinstellorgan (19) angeordnet ist.

3. Spindelsystem nach Anspruch 1, dadurch gekennzeichnet, daß zwischen dem Tragkörper (16) und dem Gehäuse (12) der Zusatzeinheit weitere kraftübertragende, fernbetätigbare Feinstellorgane (13) angeordnet sind.

4. Spindelsystem nach Anspruch 2 oder 3, dadurch gekennzeichnet, daß die Feinstellorgane (13, 19) aus der Gruppe der piezoelektrischen Aktuatoren, Tranlatoren und Wärmedehnstähle ausgewählt sind.

5. Spindelsystem nach Anspruch 1, dadurch gekennzeichnet, daß das Führungsteil (17) für den Tragkörper (16) im wesentlichen im Bereich oberhalb des vorderen Teils der Abrichtspindel (10) angeordnet ist.

6. Spindelsystem nach Anspruch 1, dadurch gekennzeichnet, daß das Führungsteil (17) für den Tragkörper (16) im wesentlichen oberhalb des Abrichtwerkzeugs (14) angeordnet ist.

7. Spindelsyystem nach Anspruch 1, dadurch gekennzeichnet, daß der Antriebmotor (26) für die Abrichtspindel (10) im Gehäuse (12) der Zusatzeinheit (3) angeordnet ist.

8. Spindelsystem nach Anspruch 3, dadurch gekennzeichnet, daß die Feinstellorgane (13) in der Weise angeordnet sind, daß durch sie die Zusatzeinheit (33) relativ zum Tragkörper (16) in wenigstens zwei Freiheitsgraden verstellbar ist.

9. Spindelsystem nach Anspruch 1, dadurch gekennzeichnet, daß das Hauptgehäuse (9) wenigstens teilweise als Schweißkonstruktion augebildet ist.

10. Spindelsystem nach Anspruch 1, dadurch gekennzeichnet, daß das Gehäuse (12) der Zusatzeinheit (33) wenigstens teilweise als Schweißkonstruktion ausgeführt ist.

11. Spindelsystem nach Anspruch 1, dadurch gekennzeichnet, daß die Spindeln (3, 10) über wärmedämmende Zwischenglieder (11, 64) in den jeweiligen Gehäusen (9, 12) gelagert sind.

12. Spindelsystem nach Anspruch 11, dadurch gekennzeichnet, daß die wärmedämmenden Zwischenglieder (11) zur Wärmebeeinflussung zusätzlich mit Durchflußräumen (88) für ein Durchflußmedium versehen sind.

13. Spindelsystem nach Anspruch 11, dadurch gekennzeichnet, daß die wärmedämmenden Zischenglieder (11) als fest eingesetzte Buchsen ausgeführt sind.

14. Spindelsystem nach Anspruch 1, dadurch gekennzeichnet, daß mindestens eine der Spindeln (10, 74) zur Wärmebeeinflussung mit Durchflußräumen (46, 78) für ein Strömungsmedium versehen ist.

15. Spindelsystem nach Anspruch 14, dadurch gekennzeichnet, daß wenigstens ein in der Spindel (74) vorhandener Leitungsweg für ein Strömungsmedium wenigstens einen Auslaß (79) im Bereich der Aufnahme (75) für das Werkzeug (76) aufweist.

## Claims

1. Spindle system for grinding machines in which a rotatable grinding spindle (3) for a grinding wheel (1) is arranged in a main housing (9) that can be moved in the direction of feed of the grinding wheel (1) and that has side walls (9a, 9b) and a guide member (17), to which main housing is allocated an auxiliary unit (33) with a further housing (12) with a rotatable dressing spindle (1) housed in it, the auxiliary unit (33) being adjustable relative to the main housing (9) by altering the distance between the two spindles (3,10) by means of an adjustment device (20) on one guide mechanism of the guide member (17), characterised in that
a) the main housing (9) is box-shaped and that the guide of the guide member (17) making it possible for the two spindles (3,19) to be brought closer together is carried out its inner side,
b) the housing (12) of the auxiliary unit (33) is essentially arranged inside the main housing (9) and runs on a supporting body (16) on the guide member (17), and that
c) the adjustment device for the auxiliary unit (33) is located in the line of influence of the dressing tool.

2. Spindle system according to claim 1, characterised in that a working, remotecontrollable fine adjustment device (19) is arranged between the guide member (20) for the auxiliary unit (33) and the supporting body (16) for the auxiliary unit.

3. Spindle system according to claim 1, characterised in that further working, remote-controllable fine adjustment devices (13) are arranged between the supporting body (16) and the housing (12) of the auxiliary unit.

4. Spindle system according to claim 2 or 3, characterised in that the fine adjustment devices (13, 19) are selected from piezoelectric actuators, translators and thermal expansion steels.

5. Spindle system according to claim 1, characterised in that the guide member (17) for the supporting body (16) is essentially arranged in the region above the front portion of the dressing spindle (10).

6. Spindle system according to claim 1, characterised in that the guide member (17) for the supporting body (16) is essentially arranged above the dressing tool (14).

7. Spindle system according to claim 1, characterised in that the drive motor (26) for the dressing spindle (10) is arranged in the housing (12) of the auxiliary unit (3).

8. Spindle system according to claim 3, characterised in that the fine adjustment devices (13) are arranged such that the auxiliary unit (33) can be adjusted through them relative to the supporting body (16) through at least two degrees of freedom.

9. Spindle system according to claim 1, characterised in that the main housing is at least partially a welded construction.

10. Spindle system according to claim 2, characterised in that the housing (12) of the auxiliary unit (33) is at least partially a welded construction.

11. Spindle system according to claim 1, characterised in that the spindles (3, 10) are supported in the respective housings (9, 12) by heat-insulating connecting members (11, 64).

12. Spindle system according to claim 11, characterized in that the heat-insulating connecting members (11) are also provided with flow chambers (88) for a flow medium for the purposes of heat removal.

13. Spindle system according to claim 11, characterized in that the heat-insulating connecting members (11) are fixed bushes.

14. Spindle system according to claim 1, characterised in that at least one of the spindles (10, 74) is provided with flow chambers (46, 78) for a flow medium for the purposes of heat removal.

15. Spindle system according to claim 14, characterised in that at least one conduction path for a flow medium in the spindle (74) has at least one outlet (79) in the region of the receiver (75) for the tool (76).

## Revendications

1. Système de broches pour machines-outils, dans le cas duquel une broche rotative (3) pour une meule (1) est portée dans un carter principal (9) qui présente des parois latérales (9a, 9b) et une pièce de guidage (17), qui peut coulisser dans la direction d'avance de la meule (1) et auquel correspond un ensemble auxiliaire (33) présentant un autre carter (12) avec une broche rotative de dressage (10) qui y est logée, l'ensemble auxiliaire (33) pouvant se déplacer par rapport au carter principal (9), le long d'un guidage de la pièce de guidage (17), au moyen d'un organe de déplacement (20), dans le sens d'une modification de la distance entre les deux broches (3, 10), système caractérisé
a) par le fait que le carter principal (9) est conçu sous forme de caisson et porte, sur sa face intérieure, le guidage de la pièce de guidage (17) qui permet le rapprochement des deux broches (3, 19),
b) par le fait que le carter (12) de l'ensemble auxiliaire (33) est essentiellement disposé à l'intérieur du carter principal (9) et qu'il est guidé le long de la pièce de guidage (17) par l'intermédiaire d'un support (16), et
c) par le fait que l'organe de déplacement (20) de l'ensemble auxiliaire (33) est situé sur la ligne d'action de l'outil de dressage (14).

2. Système de broches selon la revendication 1, caractérisé par le fait qu'entre l'organe de déplacement (20) de l'ensemble auxiliaire (23) et le support (16) de l'ensemble auxiliaire est disposé un organe de réglage fin (19) qui reprend l'effort et peut se manoeuvrer à distance.

3. Système de broches selon la revendication 1, caractérisé par le fait qu'entre le support (16) et le carter (12) de l'ensemble auxiliaire sont disposés d'autres organes de réglage fin (13) qui reprennent l'effort et peuvent se manoeuvrer à distance.

4. Système de broches selon la revendication 2 ou 3, caractérisé par le fait que les organes de réglage fin (13, 19) sont choisis parmi le groupe constitué des actionneurs piézo-électriques, de répéteurs et de jauges thermiques.

5. Système de broches selon la revendication 1, caractérisé par le fait que la pièce de guidage (17) du support (16) est sensiblement disposée dans la zone située au-dessus de la partie avant de la broche de dressage (10).

6. Système de broches selon la revendication 1, caractérisé par le fait que la pièce de guidage (17) du support (16) est sensiblement disposée au-dessus de l'outil de dressage (14).

7. Système de broches selon la revendication 1, caractérisé par le fait que le moteur d'entrainement (26) de la broche de dressage (10) est disposé dans le carter (12) de l'ensemble auxiliaire (3).

8. Système de broches selon la revendication 3, caractérisé par le fait que les organes de réglage fin (13) sont disposés de façon que grâce à eux l'ensemble auxiliaire (33) puisse se déplacer, par rapport au support (16), avec au moins deux degrés de liberté.

9. Système de broches selon la revendication 1, caractérisé par le fait que le carter principal (9) est au moins partiellement conçu sous forme de construction soudée.

10. Système de broches selon la revendication selon la revendication 1, caractérisé par le fait que le carter (12) de l'ensemble auxiliaire (33) est au moins partiellement réalisé sous forme de construction soudée.

11. Système de broches selon la revendication 1, caractérisé par le fait que les broches (3, 10) sont portées dans les carters respectifs (9, 12) au moyen d'organes intermédiaires isolants (11, 64).

12. Système de broches selon la revendication 11, caractérisé par le fait que les organes intermédiaires isolants (11) sont en outre munis, pour exercer une influence thermique, d'espaces d'écoulement (88) pour un médium qui s'y écoule.

13. Systèmes de broches selon la revendication 11, caractérisé par le fait que les organes intermédiaires isolants (11) sont réalisés sous forme de manchons insérés de façon fixe.

14. Système de broches selon la revendication 1, caractérisé par le fait qu'au moins l'une des broches (10, 74) est munie, pour exercer une influence thermique, d'espaces d'écoulement (46, 78) pour un médium qui s'y écoule.

15. Système de broches selon la revendication 14, caractérisé par le fait qu'au moins un passage existant dans la broche (74) pour un médium qui s'y écoule présente au moins une sortie (79) au voisinage du mandrin (75) pour l'outil (76).
